# EUROPÄISCHE PATENTANMELDUNG

(11) **EP 2 023 059 A1**
(43) Veröffentlichungstag der Anmeldung: **11.02.2009**
(21) Anmeldenummer: 07113928.1
(22) Anmeldetag: 07.08.2007
(51) Int. Cl.: F24J 2/52, H01L 31/048

(54) **Montagegestell zur gebäudeintegrierten Anbringung von Photovoltaikmodulen und Solarkollektoren**

(71) Anmelder: Weffling, Jean-Claude, 6723 Grevenmacher (LU)
(72) Erfinder: Weffling, Jean-Claude, 6723 Grevenmacher (LU)
(74) Vertreter: Beissel, Jean

(57) **Zusammenfassung**

Ein als Regenwasser abführendes System ausgestaltetes Montagegestell (10) zur gebäudeintegrierten Anbringung von Photovoltaikmodulen (12) und/oder Solarkollektoren an einer senkrechten oder geneigten Gebäudeaußenfläche umfasst mehrere in vorgegebenem Abstand angeordnete Tragschienen (16) sowie zwischen jeweils zwei benachbarten Tragschienen (16) angeordnete Abdichtplatten (52). Dabei weist eine Tragschiene (16) des Montagesystems (10) jeweils an der einer benachbarten Tragschiene (16) gegenüberliegenden Seite ein Auflager (44,46) für die Abdichtplatten (52), an welches die Abdichtplatten (52) unter Bildung einer dichten Verbindungsstelle durch eine Haltevorrichtung (50) angedrückt werden, sowie an der gebäudeabgewandten Seite eine Befestigungsvorrichtung zum Befestigen der Photovoltaikmodule und/oder Solarkollektoren auf.

## Beschreibung

### Technisches Gebiet

Die vorliegende Erfindung betrifft allgemein ein Montagegestell zur Aufnahme von gerahmten oder ungerahmten Photovoltaikmodulen (für die Stromproduktion) sowie Solarkollektoren (für die Warmwasseraufbereitung), insbesondere ein derartiges Montagegestell, welches in eine geneigte oder senkrechte Gebäudefläche integriert werden kann.

### Stand der Technik

Im Gegensatz zu Montagesystemen, die einer Gebäudefläche lediglich außenseitig vorgesetzt sind (z.B. bei sogenannten Aufdachmontagesystemen) ist bei gebäudeintegrierten Montagesystemen, z.B. bei sogenannten Inndachlösungen oder bei fassadenintegrierten Systemen, das Montagegestell integraler Bestandteil der betreffenden Gebäudefläche und sorgt insbesondere für deren Wasserdichtigkeit.

Um die Dichtigkeit der Gebäudefläche bei gebäudeintegrierten Montagesystemen zu erreichen, werden derzeit zwei im Ansatz unterschiedliche Lösungen verfolgt.

Nach der ersten dieser Lösungen bilden die Photovoltaikmodule zusammen mit den sie verbindenden Elementen (etwa Auflageschienen) die wasserabführende Schicht. Nach der zweiten Lösung wird unterhalb der Photovoltaikmodule eine zusätzliche Drainageschicht angelegt. In derzeit erhältlichen Systemen handelt es sich bei dieser Drainageschicht um Plastikbahnen, die an den Dachlatten befestigt werden. Das Montagegestell für die Photovoltaikmodule wird auf die Drainageschicht draufgelegt und durch sie hindurch an der Dachkonstruktion befestigt.

Die bestehenden Montagesysteme weisen eine Reihe von Nachteilen auf. In Fällen, in denen Dachkonstruktion keine durchgängig begehbare Fläche bietet, ergeben sich Schwierigkeiten beim Anbringen oder Austausch der Photovoltaikmodule. Weiter sind die bestehenden Lösungen bei Dächern mit wenig Neigung, etwa von Fabrikhallen und dergleichen, ungeeignet, da die Wasserdichtigkeit nicht mehr für alle Wetterbedingungen garantiert werden kann.

Bei Fabrikhallendächern ergibt sich das zusätzliche Problem, dass weite Distanzen (typischerweise ca. 1,5-2 m) zwischen dem Tragwerk überspannt werden müssen. Das Auslegen von Plastikbahnen ohne die Installation einer engmaschigen Unterkonstruktion ist deshalb nicht möglich.

Die bestehenden Systeme haben weiter den Nachteil, dass ihre Windfestigkeit nur mit Windgeschwindigkeiten bis etwa 100-120 km/h garantiert werden kann und dass sie, beispielsweise aufgrund der Verwendung vom Plastikmaterialien, nur eine niedrige Salzwasserbeständigkeit aufweisen, was ihren Einsatz in küstennahen Gebieten einschränkt oder verbietet.

### Aufgabe der Erfindung

Eine Aufgabe der vorliegenden Erfindung ist es, ein Montagegestell zur Anbringung von Photovoltaikmodulen und/oder Solarkollektoren zu schaffen, mit welchem die Nachteile des Standes der Technik überwunden werden können.

### Allgemeine Beschreibung der Erfindung

Diese Aufgabe wird durch den Gegenstand des Anspruchs 1 gelöst, welcher ein als Regenwasser abführendes System ausgestaltetes Montagegestell zur gebäudeintegrierten Anbringung von Photovoltaikmodulen und/oder Solarkollektoren an einer senkrechten oder geneigten Gebäudeaußenfläche betrifft. Das genannte Montagegestell umfasst mehrere in vorgegebenem Abstand angeordnete Tragschienen sowie zwischen jeweils zwei benachbarten Tragschienen angeordnete Abdichtplatten. Dabei weist eine Tragschiene des Montagesystems jeweils an der einer benachbarten Tragschiene gegenüberliegenden Seite ein Auflager für die Abdichtplatten, an welches die Abdichtplatten unter Bildung einer dichten Verbindungsstelle durch eine Haltevorrichtung angedrückt werden, sowie an der gebäudeabgewandten Seite eine Befestigungsvorrichtung zum Befestigen der Photovoltaikmodule und/oder Solarkollektoren auf. Bei der vorliegenden Erfindung werden demnach die Abdichtplatten, welche vorteilhafterweise aus Leichtbauplatten (etwa metallische Leichtbauplatten, beispielsweise aus Aluminium oder einer Aluminiumlegierung, oder Platten aus Holz oder Kunststoff) bestehen, zwischen der Haltevorrichtung und dem Auflager eingeklemmt und bilden zwischen den Tragschienen eine Wasser abführende Fläche. Aneinander angrenzende Abdichtplatten können dabei untereinander mit einer Nut-Feder-Verbindung und/oder mittels einer entsprechenden Dichtung verbunden sein. Das System ist dadurch für Gebäudeflächen mit Neigungen von 3 bis 90°, wie z.B. Dächer oder Fassaden geeignet.

Die Erfindung betrifft weiter eine Tragschiene zur Verwendung in einem derartigen gebäudeintegrierten Montagegestell. Eine solche Tragschiene hat bevorzugt vier Seiten, wobei im Folgenden die im montierten Zustand der Tragschiene vom Gebäude abgewandte Seite auch als erste Seite, die dem Gebäude zugewandte Seite auch als dritte Seite und die den benachbarten Tragschienen zugewandten Seiten auch als zweite und vierte Seiten bezeichnet werden.

Nach einer bevorzugten Ausgestaltung der Erfindung weisen die Tragschienen an der gebäudezugewandten (dritten) Seite jeweils eine längs verlaufende, C-förmige Nut zum Befestigen der Tragschienen am Tragwerk des Gebäudes (z.B. an Holzpfetten, Z-Profilen, Stahl- oder Betonträgern oder Ähnlichem) auf. Die Befestigung erfolgt Vorteilhafterweise mit Gleitmuttern, Gewindestangen oder Hammerkopfschrauben und entsprechenden Flanschplatten.

Nach einer weiteren bevorzugten Ausgestaltung der Erfindung umfasst die Befestigungsvorrichtung für die Photovoltaikmodule und/oder Solarkollektoren eine an der gebäudeabgewandten Seite der Tragschiene längs verlaufende C-förmige Nut, mittels welcher die Photovoltaikmodule bzw. die Solarkollektoren z.B. unter Verwendung von handelsüblichen Klemmhaltern, Schrauben und Gleitmuttern fixiert werden können.

Vorteilhafterweise sind die Tragschienen im Wesentlichen parallel zu einander angeordnet. Bevorzugt ist insbesondere eine Ausrichtung parallel zur Senkrechten oder Neigungsrichtung der Gebäudefläche, da so das Wasser am besten ablaufen kann.

Um die dichte Verbindungsstelle zwischen einer Tragschiene und einer Abdichtplatte herzustellen hat es sich als vorteilhaft erwiesen, ein Dichtprofil (z.B. eine Dichtlippe aus einem geeigneten Material wie etwa Gummi oder Kunststoff) zwischen Haltevorrichtung und Abdichtplatte und/oder zwischen Auflager und Abdichtplatte anzubringen ist.

Nach einer weiteren bevorzugten Ausgestaltung der Erfindung umfasst die Haltevorrichtung ein der Tragschiene zugeordnetes Profilbauteil, etwa ein Winkelprofil, welches mit seinem ersten Schenkel an der einer benachbarten Tragschiene gegenüberliegenden Seite der Tragschiene befestigt ist und mit seinem zweiten Schenkel die Abdichtplatten an das Auflager andrückt.

Die Haltevorrichtung kann auf verschiedene Arten an der ihr zugeordneten Tragschiene befestigt sein, z.B. durch eine Klemmverbindung. Bevorzugt ist die Haltevorrichtung jedoch an die Tragschiene angeschraubt. In diesem Fall weist jede Tragschiene an der einer benachbarten Tragschiene gegenüberliegenden Seite vorteilhafterweise eine Nut (beispielsweise einen Schraubkanal) auf, die sich längs an der Tragschiene erstreckt und in welcher die Haltevorrichtung mittels Schraubverbindung befestigt werden kann. Alternativ dazu könnte man auch in regelmäßigen Abständen Gewindebohrungen an der einer benachbarten Tragschiene gegenüberliegenden Seite der Tragschiene vorsehen.

Nach einer bevorzugten Ausgestaltung der Erfindung ist das Auflager derart an einen Mittelsteg der Tragschiene angebracht, dass zwischen Auflager und Mittelsteg eine Rinne ausgebildet wird, über die eindringendes Wasser abgeleitet werden kann. Diese Ausgestaltung trägt der Tatsache Rechnung, dass trotz sorgfältiger Abdichtung der Verbindungsstelle nicht vollständig ausgeschlossen werden kann, dass über die Lebensdauer des Systems nicht doch Regenwasser eindringen kann.

Alternativ könnte eine Tragschiene auch aus eine untere (die dritte Seite der Tragschiene ausmachende) und einer obere (die erste Seite der Tragschiene ausmachende) Halbschiene umfassen, wobei die untere Halbschiene das Auflager für die Abdichtplatten aufweist, und die obere Halbschiene die Haltevorrichtung zum Andrücken der Abdichtplatten sowie die Befestigungsvorrichtung zum Befestigen der Photovoltaikmodule und/oder Solarkollektoren umfasst. Bei der Montage würden in diesem Fall zuerst die unteren Halbschienen (etwa mittels der gebäudeseitigen C-Nut) am Gebäude befestigt und dann die Abdichtplatten in Position gebracht und dadurch fixiert, dass die oberen Halbschienen an den unteren Halbschienen befestigt werden. Zum Befestigen einer oberen Halbschiene an einer unteren Halbschiene weisen diese bevorzugt entsprechende Befestigungsstellen (etwa Schraubkanal, Bohrungen, oder Ähnliches) auf.

Durch geeignete Wahl der Materialien, wie z.B. Tragschienen aus Aluminium, einer Aluminiumlegierung oder Edelstahl, entsprechenden Haltevorrichtungen und sonstigen Komponenten (Schrauben, Gewindestangen, Muttern, etc) wird eine verbesserte Salzwasserbeständigkeit und Windfestigkeit erzielt.

Ein weiterer Vorteil der Erfindung liegt darin, dass die Photovoltaikmodule und/oder die Solarkollektoren nicht notwendigerweise flach auf dem Montagegestell aufliegen müssen. Um den Wirkungsgrad der Module und/oder der Kollektoren bei nicht optimaler Neigung des Untergrunds zu steigern, besteht die Möglichkeit, die Module und/oder die Kollektoren mit Montagebügeln an einer Seite aufzurichten. Solche Montagebügel würden einerseits an den Tragschienen (etwa unter Verwendung der oberseitigen Nut) und andererseits an den Modulen und/oder Kollektoren befestigt werden.

### Kurze Beschreibung der Figuren

Im Folgenden wird nun eine bevorzugte Ausgestaltung der Erfindung anhand der beiliegenden Figuren beschrieben. Dabei zeigen:
Fig. 1 eine perspektivische Ansicht eines Montagegestells mit installierten Photovoltaikmodulen
Fig. 2 eine vergrößerte Ansicht des Details A der Fig. 1;
Fig. 3 eine vergrößerte Ansicht des Details B der Fig. 1;
Fig. 4 einen Querschnitt einer Tragschiene für ein erfindungsgemäßes Montagegestell.

### Beschreibung einer bevorzugten Ausgestaltung der Erfindung

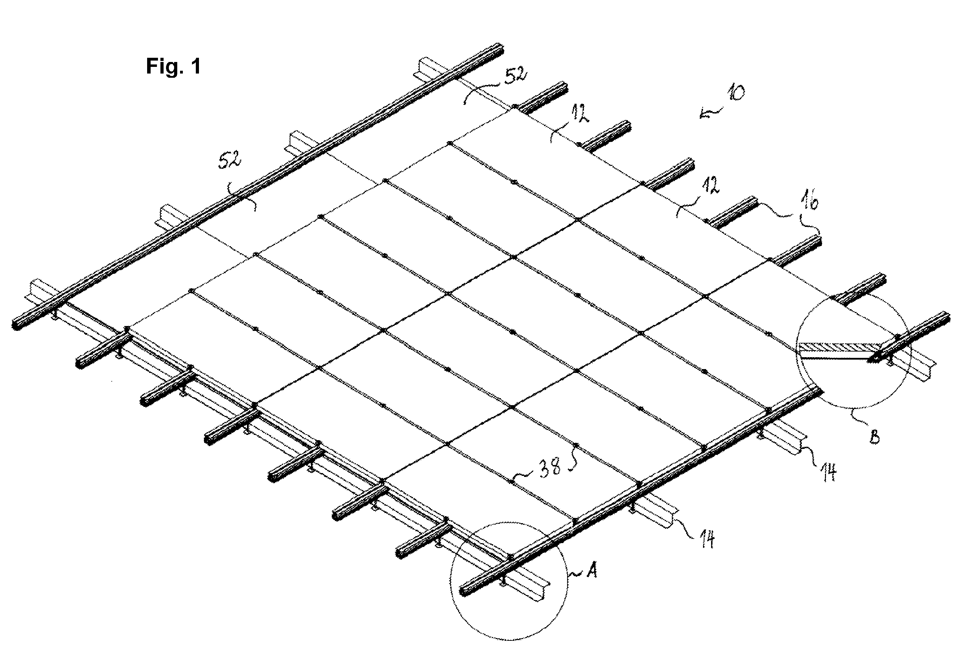

Die Figuren 1-3 zeigen, zur Illustration der Erfindung, ein Inndach-Montagegestellsystem 10 zur Befestigung von Photovoltaikmodulen 12 am Tragwerk eines Gebäudes. In den Zeichnungen ist das Tragwerk durch mehrere parallel verlaufende Stahlträger 14 in Z-Profil-Bauweise dargestellt. Das Tragwerk des Gebäudes könnte allerdings auch Träger eines anderen Typs oder aus einem anderen Material umfassen (beispielsweise Holzpfetten, Betonträger, usw.)

Der Aufbau ist als Regenwasser abführendes System für Gebäudeflächen, wie z.B. mit Dachschrägen, mit 3 bis 90° Neigung ausgelegt. Aufgrund der Anwendungsmöglichkeit bis 90° ist das Montagesystem 10 ebenfalls für Fassadenanwendungen geeignet.

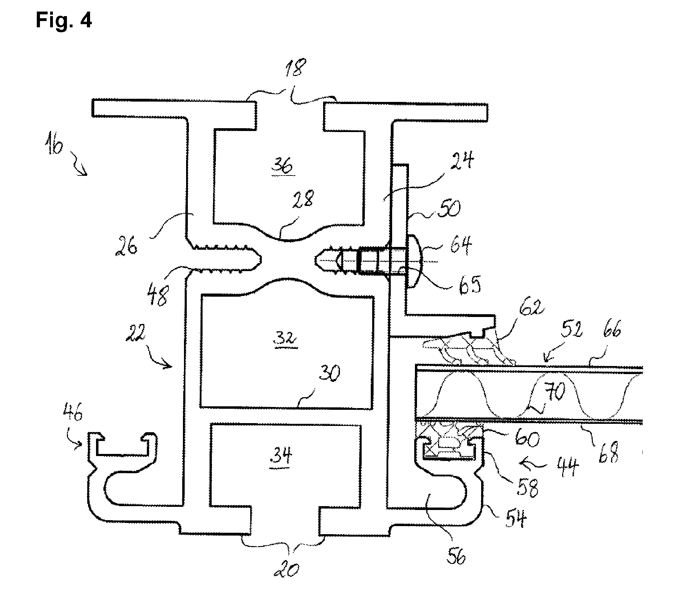

Kernstück des Montagegestells 10 sind mehrere quer zu den Stahlträgern 14 in regelmäßigen Abständen angeordnete Tragschienen 16 die am besten entlang der Neigungsrichtung der Gebäudefläche (oder der Senkrechten) ausgerichtet sind. Der Aufbau dieser Tragschienen 16 ist am besten aus dem in Fig. 4 gezeigten Querschnitt ersichtlich. Eine Tragschiene 16 umfasst an der ersten (vom Tragwerk abgewandten) Seite einen ersten Flanschabschnitt 18 zum Tragen der Photovoltaikmodule 12, an der dritten (dem Tragwerk zugewandten) Seite einen zweiten Flanschabschnitt 20 zum Abstützen auf dem Tragwerk. Die beiden Flanschabschnitte 18, 20 werden durch einen Mittelsteg 22 miteinander verbunden. Der Mittelsteg 22 umfasst eine erste und eine zweite Wand 24, 26, welche zwischen den Flanschabschnitten 18, 201 die zweite, bzw. die vierte Seite der Tragschiene 16 definieren und miteinander über Querstege 28, 30 unter Bildung eines Hohlraums 32 verbunden sind.

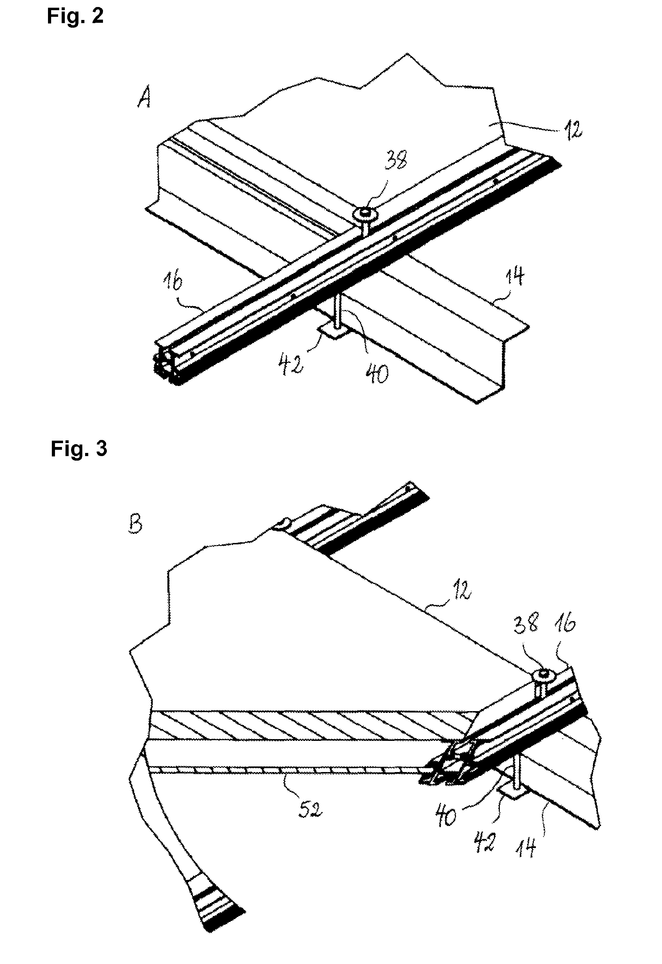

An der ersten Seite der Tragschiene 16 bilden der erste Flanschabschnitt, die Wände 24, 26 sowie der Quersteg 28 eine längs verlaufende C-förmige Nut 36, in der die Photovoltaikmodule, wie in den Figuren 2 und 3 gezeigt, mit Klemmvorrichtungen 38 an der Tragschiene 16 befestigt werden. In ähnlicher Weise bilden an der dritten Seite der Tragschiene 16 der zweite Flanschabschnitt, die Wände 24, 26 sowie der Quersteg 30 eine längs verlaufende C-förmige Nut 34, mittels welcher die Tragschiene 16 am Tragwerk des Gebäudes befestigt wird. Dies geschieht bevorzugt mittels Gleitmuttern und Gewindestangen 40, die an beiden Seiten des Stahlträgers 14 in der Nut fixiert werden, und einer entsprechenden Flanschplatte 42, welche über die Gewindestangen 40 von hinten an den Stahlträger 14 angepresst wird. Mit derartigen Befestigungen und entsprechender Wahl der verwendeten Materialien werden weitaus höhere Windgeschwindigkeitszulassungen (bis 200 km/h) erreicht als mit herkömmlichen Montagestellen.

Jede Tragschiene 16 weist weiter an der zweiten und vierten Seite jeweils ein Auflager 44, 46 und Befestigungsstellen 48 für eine dem jeweiligen Auflager 44, 46 zugeordnete Haltevorrichtung 50 auf. Die Auflager 44, 46 dienen dazu, die Abdichtplatten 52 zu tragen, welche die Zwischenräume zwischen den parallel ausgerichteten Tragschienen 16 dichtend abschließen und eine Fläche bilden, über die das Niederschlagswasser ablaufen kann. Die Auflager 44, 46 und die Haltevorrichtung 50 sind dabei so ausgestaltet, dass sie eine Abdichtplatte 52 unter Bildung einer dichten Verbindungsstelle zwischen sich einklemmen. Ein Auflager 44, 46 umfasst jeweils eine Halterung 58 für eine Dichtlippe 60 und einen Bügelabschnitt 54, welcher die Halterung 58 mit der Wand 24 oder 26 des Mittelstegs 22 verbindet und zusammen mit dieser eine Rinne 56 ausbildet. Eine Haltevorrichtung 50 umfasst im dargestellten Beispiel ein Winkelprofil welches mit seinem ersten Schenkel an den Befestigungsstellen 48 der Wand 24 oder 26 des Mittelstegs 22 befestigt ist und an seinem zweiten Schenkel eine Dichtlippe 62 aufweist, über es die Abdichtplatte 52 an das dem zweiten Schenkel gegenüberliegende Auflager 44 andrückt.

Die Befestigungsstellen 48 und die Maße der Haltevorrichtung 50 sind derart aufeinander abgestimmt, dass die Abdichtplatten 52 mit dem richtigen Druck auf das Auflager 44 gepresst werden, was eine optimale Dichtigkeit der Verbindungsstelle garantiert. Dies wird beispielsweise dadurch erreicht, dass die Befestigungsstellen 48 zumindest in der quer zur Längsachse der Tragschiene 16 verlaufenden Richtung (in Fig. 4 also in senkrechter Richtung) fest vorgegeben sind auch die Haltevorrichtung 50 beim Befestigen nur wenig oder kein Spiel zulässt. Im Fall der gezeigten Schraubverbindung sind die Befestigungsstellen 48 als Gewindebohrungen oder als längs verlaufender Schraubkanal (d.h. eine Nut, deren Breite derart an die Schrauben 64 angepasst ist, dass deren Gewinde sich beim Eindrehen der Schauben in die Flanken der Nut einschneidet) ausgestaltet. In Querrichtung ist somit die Position jeder Schraube 64 bezüglich der Tragschiene 16 fest vorgegeben. Um einen optimalen Anpressdruck zu erreichen, muss auch die Bohrung 65 in der Haltevorrichtung 50 in der Querrichtung dem Durchmesser der Schraube 64 genau angepasst sein. In Längsrichtung der Tragschiene 16 ist die Lage der Schraubverbindung weniger kritisch. Dementsprechend können die Bohrungen 65 in der Haltevorrichtung 50 auch als in Längsrichtung verlaufende Langlöcher ausgestaltet sein. Eine optimale Positionierung der Haltevorrichtung 50 lässt sich natürlich auch unabhängig von den Befestigungsstellen 48 erreichen, indem man Positionierungshilfen am Mittelsteg 22 und/oder an der Haltevorrichtung 50 vorsieht. Beispielsweise könnte der an der Wand 24 oder 26 anliegende Teil der Haltevorrichtung mit einer Rippe, bzw. einer Nut, versehen sein, die mit einer entsprechenden Nut, bzw. Rippe, in der Wand 24 oder 26 als Positionierhilfe zusammenwirkt. Alternativ (oder zusätzlich) könnte auch der Flanschbereich 18 für die dementsprechend dimensionierte Haltevorrichtung 50 einen Anschlag bilden.

Da es trotz optimaler Montage nicht ganz ausgeschlossen werden kann, dass Wasser von außen hinter die Verbindungsstelle gelangt, ist die Rinne 56 vorgesehen, über die das eingedrungene Wasser dann abgeführt werden kann.

Die zwischen die Tragschienen 16 eingelegten Abdichtplatten 52 haben vorteilhafterweise eine Stärke, die das Begehen, etwa durch den Monteur oder Wartungspersonal, erlaubt (falls dies nicht durch die Neigung der Gebäudefläche ausgeschlossen wird). Als besonders geeignet als Abdichtplatten 52 werden Leichtbauplatten aus Aluminium oder einer Aluminiumlegierung angesehen, die eine Sandwichstruktur mit zwei Deckblechen 66, 68 und einem zwischen den Deckschichten 66, 68 befestigten wellen- oder wabenförmigen Abstandsblech 70 aufweisen. Leichtbauplatten mit wellenförmigem Abstandsblech sind beispielsweise als Metawell™-Leichtbauplatten im Handel verfügbar. Auch Leichtbaufaserverbundplatten in Sandwichbauweise mit einem waben- oder wellenförmigen Abstandsblech, welches beidseitig mit Faserverbunddeckschichten verklebt ist, wie sie etwa von der Firma Eurocomposites angeboten werden, werden als geeignet als Abdichtplatten angesehen. Untereinander werden aneinander angrenzende Abdichtplatten 52 bevorzugt mit Nut-Feder-Verbindungen oder über eine Dichtung verbunden, so dass jeweils zwischen zwei benachbarten Tragschienen 16 eine durchgehende Fläche entsteht.

Wie die Abdichtplatten sind auch die Tragschienen 16 bevorzugt aus Leichtbaumaterial gefertigt, wie z.B. Aluminium oder einer Aluminiumlegierung. Die Abmessungen der Tragschienen 16 sind so gewählt, dass sich damit die Abstände zwischen den Stahlträgern 14 (oder anderen Befestigungspunkten am Tragwerk) überbrücken lassen und die anvisierte Windgeschwindigkeitszulassung erreicht wird. Bevorzugt haben die Tragschienen im Querschnitt Abmessungen (Breite und Höhe) von etwa 6-10 cm. Die Länge der Tragschienen 16 wird den Bedürfnissen des Bauwerks entsprechend gewählt.

Zum Abdichten von Ortgängen, First und/oder Traufe können die üblichen Materialien des Dachdeckerhandwerks eingesetzt werden.

## Patentansprüche

1. Als Regenwasser abführendes System ausgestaltetes Montagegestell zur gebäudeintegrierten Anbringung von Photovoltaikmodulen und/oder Solarkollektoren an einer senkrechten oder geneigten Gebäudeaußenfläche, umfassend
mehrere in vorgegebenem Abstand angeordnete Tragschienen; sowie zwischen benachbarten Tragschienen angeordnete Abdichtplatten;
wobei eine Tragschiene jeweils an der einer benachbarten Tragschiene gegenüberliegenden Seite ein Auflager für die Abdichtplatten, an welches die Abdichtplatten unter Bildung einer dichten Verbindungsstelle durch eine Haltevorrichtung angedrückt werden, sowie an der gebäudeabgewandten Seite eine Befestigungsvorrichtung zum Befestigen der Photovoltaikmodule und/oder Solarkollektoren aufweist.

2. Montagegestell nach Anspruch 1, wobei die Tragschienen an der gebäudezugewandten Seite jeweils eine längs verlaufende, C-förmige Nut zum Befestigen der Tragschienen am Tragwerk des Gebäudes aufweisen.

3. Montagegestell nach Anspruch 1 oder 2, wobei die Befestigungsvorrichtung eine an der Tragschiene längs verlaufende C-förmige Nut umfasst.

4. Montagegestell nach einem der Ansprüche 1 bis 3, wobei die Tragschienen im Wesentlichen parallel zu einander verlaufend angeordnet sind.

5. Montagegestell nach einem der Ansprüche 1 bis 4, wobei zwischen Haltevorrichtung und Abdichtplatten und/oder zwischen Auflager und Abdichtplatte ein Dichtprofil angeordnet ist.

6. Montagegestell nach einem der Ansprüche 1 bis 5, wobei die Haltevorrichtung ein Winkelprofil umfasst, welches mit seinem ersten Schenkel an der einer benachbarten Tragschiene gegenüberliegenden Seite der Tragschiene befestigt wird und mit seinem zweiten Schenkel die Abdichtplatten an das Auflager andrückt.

7. Montagegestell nach einem der Ansprüche 1 bis 6, wobei jede Tragschiene an der einer benachbarten Tragschiene gegenüberliegenden Seite eine Nut zum Befestigen der Haltevorrichtung aufweist.

8. Montagegestell nach einem der Ansprüche 1 bis 7, wobei das Auflager derart an einen Mittelsteg der Tragschiene angebracht ist, dass zwischen Auflager und Mittelsteg eine Rinne ausgebildet wird, über die eindringendes Wasser abgeleitet werden kann.

9. Montagegestell nach einem der Ansprüche 1 bis 5, wobei eine Tragschiene jeweils eine der gebäudezugewandten Seite der Tragschiene zugeordnete erste Halbschiene und eine der gebäudeabgewandten Seite der Tragschiene zugeordnete zweite Halbschiene umfasst, wobei die erste Halbschiene das Auflager für die Abdichtplatten aufweist und die zweite Halbschiene die Haltevorrichtung für die Abdichtplatten sowie die Befestigungsvorrichtung zum Befestigen der Photovoltaikmodule und/oder Solarkollektoren aufweist.

10. Montagegestell nach einem der Ansprüche 1 bis 9, wobei die Tragschienen, aus einer Aluminiumlegierung oder Edelstahl gefertigt sind.

11. Montagegestell nach einem der Ansprüche 1 bis 10, wobei die Abdichtplatten aus Leichtbauplatten bestehen.

12. Tragschiene zur Verwendung in einem Montagegestell nach den Ansprüchen 1 bis 11.
